# EUROPEAN PATENT SPECIFICATION

(11) **EP 1 795 398 B1**
(45) Date of publication and mention of the grant of the patent: **29.04.2009**
(21) Application number: 06004485.6
(22) Date of filing: 06.03.2006
(51) Int. Cl.: B60R 11/02, B60K 35/00, B60N 2/48, H04R 5/02, H04R 5/04

(54) **In-vehicle information reproducing apparatus**
Informationswiedergabevorrichtung in einem Fahrzeug
Appareil de lecture d'informations à l'intérieur d'un véhicule

(30) Priority: 09.12.2005 JP 2005356369
(43) Date of publication of application: 13.06.2007
(60) Divisional application: 08010485.4
(73) Proprietor: Olympus Corporation, Tokyo 151-0072 (JP)
(72) Inventor: Tatsuta, Seiji c/o I.P. Support Dept. Olympus, Hachioji-shi Tokyo 192-8512 (JP); Iba, Yoichi c/o I.P. Support Dept. Olympus, Hachioji-shi Tokyo 192-8512 (JP); Sugihara, Ryohei c/o I.P. Support Dept. Olympus, Hachioji-shi Tokyo 192-8512 (JP)
(74) Representative: von Hellfeld, Axel

(56) References cited:
- EP-A2- 0 993 230
- WO-A-03/007491
- WO-A-20/05031444
- DE-A1- 2 449 193
- DE-A1- 10 057 261
- DE-B3- 10 339 314
- US-A- 4 758 047
- US-A1- 2002 196 134
- US-A1- 2005 032 500

## Description

The present invention relates to an in-vehicle information reproducing apparatus.

A multi-view display (hereinafter referred to as MVD) has been being developed as a display tool capable of providing different pictures to plural viewers by using a single display unit. For example, Jpn. Pat. No. 3398999 has disclosed an example of the MVD as a multi-view picture display unit which enables viewers to visually recognize different pictures corresponding to angles formed between a display face and line of vision.

If considering use of such an MVD as a substitute for car navigation system currently mounted on a vehicle and used for multi-purpose, it can be considered to provide information relating to driving such as map to a car driver and at the same time TV broadcasting picture or movie picture to passengers seated beside the car driver and rear seats.

On the other hand, as a system which provides audio, for example, Jpn. Pat. Applin. KOKAI Publication No. 7-288885 has disclosed a configuration in which speakers as a sound generating device and reflectors are provided on a head rest of a vehicle seat to provide excellent music without use of a headphone.

Document WO 2005/031444 A2 disclosing the features of the preamble of claim 1 concerns a multi-view display which is arranged to display information in an automotive vehicle. The multi-view display and audio output means are arranged to output audio signals corresponding to the information displayed in one or more viewing zones.

Document DE 103 39 314 B3 concerns a method for controlling the display of different information in an automobile. A display is capable of presenting plural pictures reproduced by a picture reproducing portion corresponding to seating positions of plural passengers individually.

Document EP 0 993 230 A2 concerns a head rest for an automobile comprising speakers.

The present invention relates to an in-vehicle information reproducing apparatus having the features of claim 1. The dependent claims relate to preferred embodiments.

The invention can be more fully understood from the following detailed description when taken in conjunction with the accompanying drawings, in which:
FIG. 1 is a diagram for explaining a first outline of a first embodiment of the present invention;
FIG. 2 is a diagram for explaining a second outline of the first embodiment of the present invention;
FIG. 3 is a diagram for explaining an outline of a second embodiment of the present invention;
FIG. 4 is a block diagram showing the structure which achieves the second embodiment of the present invention;
FIG. 5A is a diagram showing an example of appearance perspective view of each seat;
FIG. 5B is a diagram showing MVD 10 installed in the center of the front panel;
FIG. 6 is a sectional view showing the structure of a third embodiment not part of the present invention;
FIGS. 7A to 7C are diagrams for explaining the structure of a fourth embodiment not part of the present invention;
FIG. 8 is a diagram for explaining the structure of a fifth embodiment of the present invention;
FIG. 9 is a diagram for explaining an outline of a sixth embodiment of the present invention;
FIG. 10 is a diagram for explaining an outline of a seventh embodiment of the present invention;
FIG. 11 is a diagram for explaining a modification of the seventh embodiment of the present invention;
FIG. 12 is a diagram for explaining an outline of an eighth embodiment of the present invention;
FIG. 13 is a diagram showing the structure for achieving a ninth embodiment of the present invention;
FIG. 14 is a diagram showing the structure of a tenth embodiment of the present invention;
FIG. 15 not part of the present invention is a diagram showing a modification of the tenth embodiment of the present invention;
FIG. 16 is a diagram for explaining an outline of an eleventh embodiment of the present invention;
FIG. 17 is a diagram showing a condition in which picture and sound of information 1 and picture and sound of information 2 are selected by the picture selector and sound selector and supplied to the driver's seat and passenger seat;
FIG. 18 is a diagram for explaining an outline of a twelfth embodiment of the present invention;
FIG. 19 is a diagram showing an example of an optical structure for distributing sound corresponding to a picture angle selected by a picture angle selector;
FIG. 20 is a diagram showing the optical structure used for employing communication with visible light or infrared light to distribute sound;
FIG. 21 is a diagram showing a structure in which a light source and a light emitting portion are disposed in the same way with respect to a light introducing plate;
FIG. 22 is a diagram showing the structure of a thirteenth embodiment of the present invention;

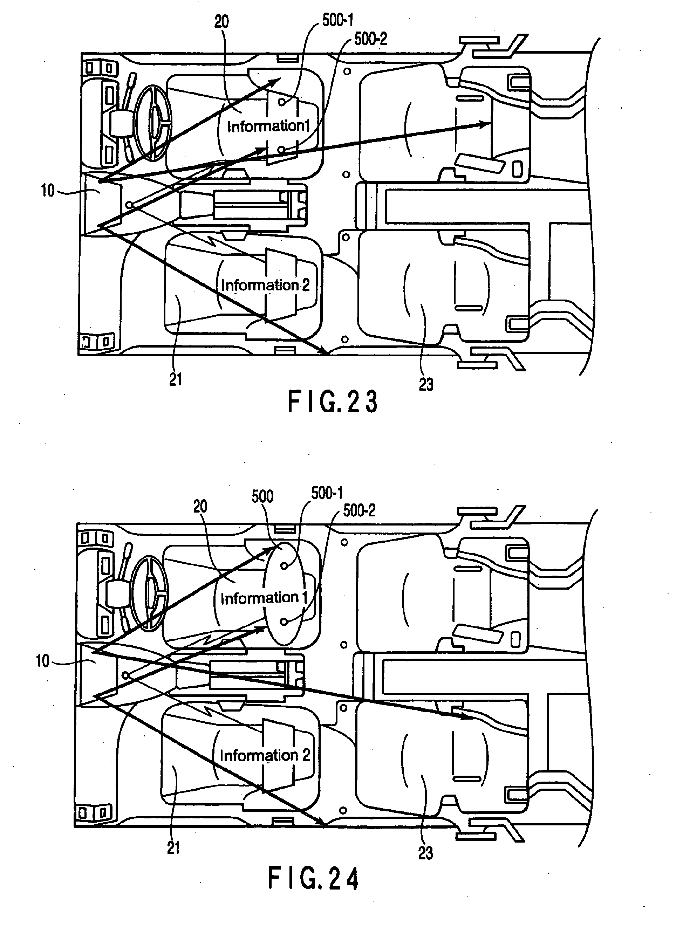

FIG. 23 is a diagram for explaining a problem generated when the head portion of a driver moves to the side of the passenger seat; and
FIG. 24 is a diagram for explaining a method for solving the problem of FIG. 23.

Hereinafter, the preferred embodiments of the present invention will be described with reference to the accompanying drawings.

### (First embodiment)

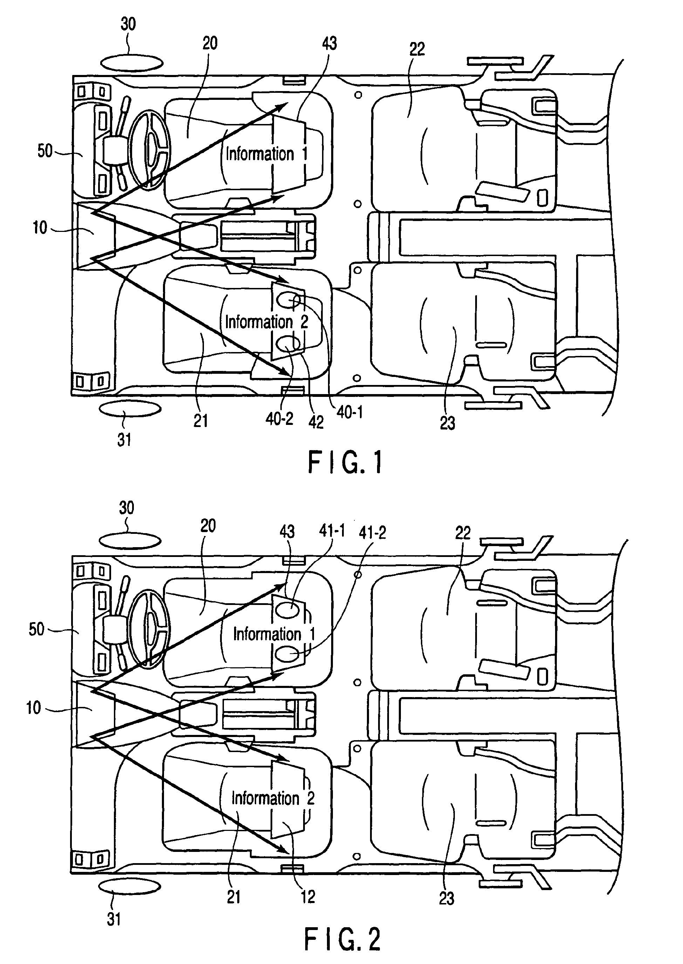

FIG. 1 is a diagram for explaining a first outline of a first embodiment of the present invention. This is a diagram showing an interior of a vehicle as seen from above and an MVD 10 is disposed in the center of a front panel 50. A driver's seat 20 and a passenger seat 21 are disposed in spaces to the right and left in the back of the MVD 10 and rear seats 22, 23 are disposed in rear spaces behind the driver's seat 20 and the passenger seat 21.

A head rest 42 of the passenger seat 21 incorporates right and left speakers 40-1, 40-2. An in-vehicle speaker 30 is disposed in vehicle side face on the side of the driver's seat 20 and an in-vehicle speaker 31 is disposed in vehicle side face on the side of the passenger seat 21.

According to this structure, as shown in FIG. 1, speakers 40-1, 40-2 are incorporated in only the head rest 42 of the passenger seat 21, which is one of the four seats 20, 21, 22, 23. This system distributes movie information (information 2) to for example, a person seated in the passenger seat 21 through the speakers 40-1, 40-2 and navigation information (information 1) and BGM information to persons seated in the driver's seat 20 and other seats 22, 23.

The person seated in the passenger seat 21 can enjoy voice of a movie which is reproduced from the speakers 40-1, 40-2 incorporated in the head rest 42 and picture of that movie from the MVD 10. On the other hand, the persons seated in the driver's seat 20 and the persons seated in the other seats 22, 23 who cannot see a picture can listen to BGM information. Further, the driver in the driver's seat 20 can receive navigation information appropriately while listening to BGM.

FIG. 2 is a diagram for explaining a second outline of the first embodiment of the present invention. This shows an interior of the vehicle as seen from above and in FIG. 2, speakers 41-1, 41-2 are incorporated in the head rest 43 of the driver's seat 20, not in the head rest 42 of the passenger seat 21 although the arrangements of the four seats and in-vehicle speakers on the vehicle side are the same as FIG. 1. This system distributes voice navigation information to the person seated in the driver's seat 20 through the speakers 41-1, 41-2 and information including TV sport program to the persons seated in the passenger seat 21 and other seats 22, 23.

Since the voice navigation information such as guide for intersection is reproduced from only the speakers 41-1, 41-2 incorporated in the head rest 43 of the passenger seat 21, the persons in the passenger seat 21 and the other seats 22, 23 can concentrate on enjoyment of TV sport program or the like. Although the driver in the driver's seat 20 cannot watch pictures of the TV sport program due to the arrangement, he or she can listen to its voice through the in-vehicle speakers 30, 31 like the persons in the passenger seat 21 and the other seats 22, 23.

### (Second embodiment)

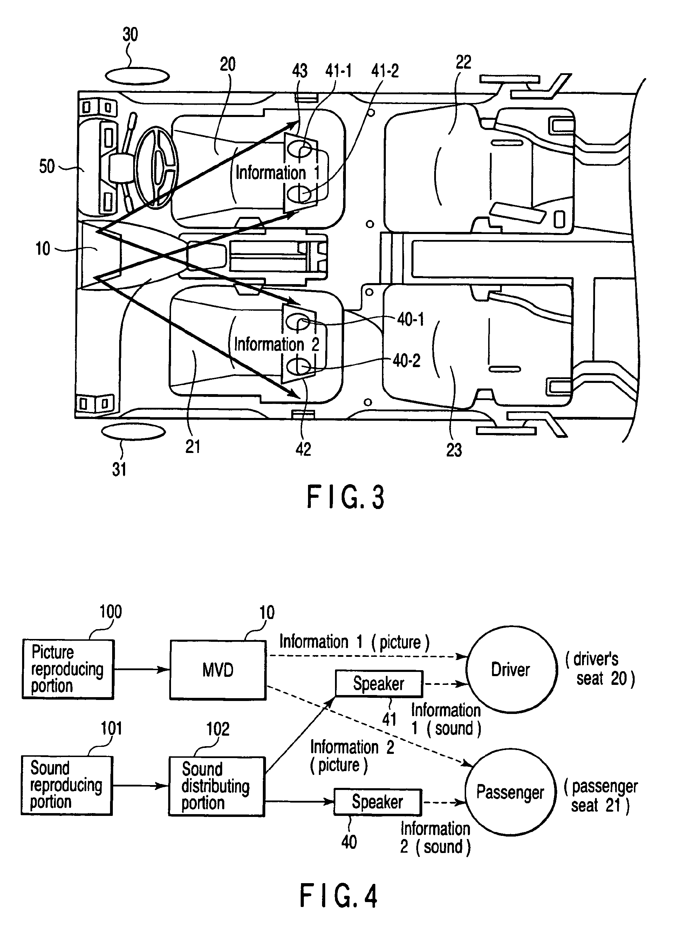

FIG. 3 is a diagram for explaining an outline of the second embodiment of the present invention. This shows an interior of a vehicle as seen from above and an MVD 10 is disposed in the center of a front panel 50. A driver's seat 20 and a passenger seat 21 are disposed in spaces to the right and left sides in the back of the MVD 10 and rear seats 22, 23 are disposed in rear spaces behind the driver's seat 20 and the passenger seat 21.

Speakers 40-1, 40-2 are incorporated in a head rest 42 of the passenger seat 21 and speakers 41-1, 41-2 are incorporated in a head rest 43 of the driver's seat 20. Further, an in-vehicle speaker 30 is disposed in the vehicle side face of the driver's seat 20 and an in-vehicle speaker 31 is disposed in the vehicle side face of the passenger seat 21.

FIG. 4 is a block diagram showing the structure for achieving the second embodiment. MVD 10 provides plural pictures reproduced by a picture reproducing portion 100 to each of the plural passengers corresponding to their seating positions. For example, information 1 is provided to the driver in the driver's seat 20 and information 2 is provided to a passenger in the passenger seat 21. A sound distributing portion 102 distributes plural sounds reproduced by a sound reproducing portion 101 corresponding to the plural pictures corresponding to the seating positions of the persons. That is, the sound distributing portion 102 supplies sound signal of information 1 to the driver through the speaker 41 and sound signal of information 2 to the passenger through the speaker 40.

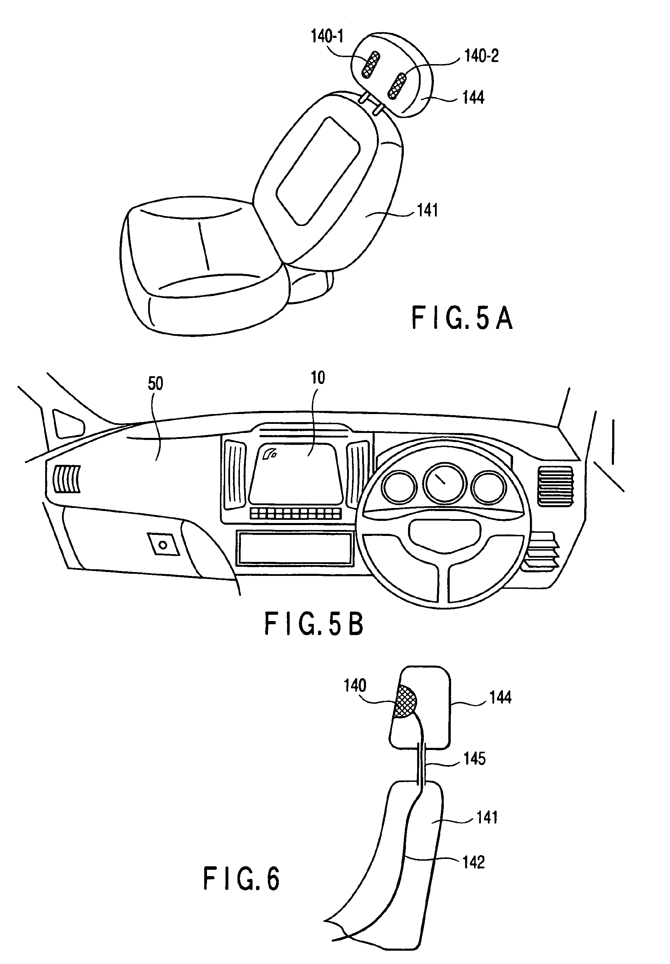

FIG. 5A shows an example of an appearance perspective view of each seat described above. A head rest 144 is installed on the top of a seat 141 and a pair of speakers 140 are incorporated in the head rest 144.

FIG. 5B is a diagram showing the condition of a front panel 50. The MVD 10 is disposed in the center of the front panel 50.

### (Third embodiment)

FIG. 6 is a sectional view showing the structure of a third embodiment not part of the present invention. A sound distributing portion 102 (FIG. 4) has a transmission passage 142 leading from a sound reproducing portion 101 (FIG. 4) to a speaker 140 and the transmission passage 142 is wired and includes a seat 141, a head rest 144 and a head rest mounting shaft 145.

This structure enables sound to be transmitted easily through wire and never damages the appearance by passing the wire through the seat 141, the head rest 144 and the head rest mounting shaft 145.

### (Fourth embodiment)

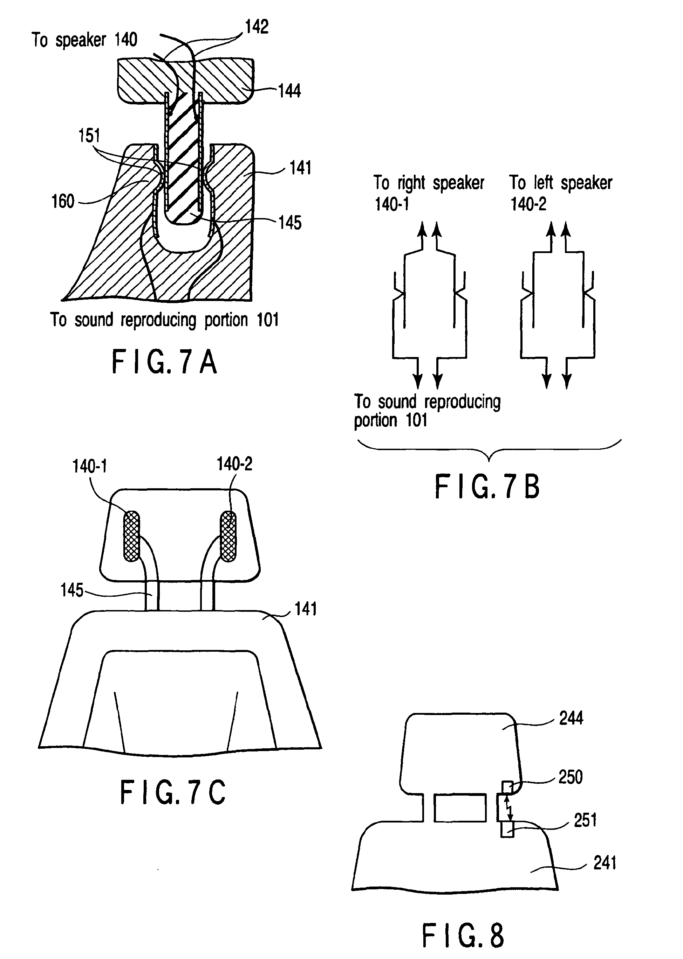

FIG. 7A is a sectional view showing the structure of a fourth embodiment not part of the present invention. The fourth embodiment contains a shaft 145 for mounting a head rest 144 containing a speaker 140 as part of the transmission passage of the sound distributing portion 102 as shown in FIG. 7A. A seat 141 has a contact point 151, which makes contact with the shaft 145 when it is inserted into a shaft receiver 160 electrically, thereby functioning as a transmission passage.

The head rest 144 may be removed when the seat 141 is adjusted to a full flat condition or for maintenance. If it is coupled with wire, inconvenience occurs at that time, but such inconvenience can be eliminated because the electric connection is established only by inserting the head rest mounting shaft 145 into the shaft receiver 160 of the seat 141.

FIG. 7B shows a condition in which a right speaker 140-1 and a left speaker 140-2 are connected electrically by inserting the shafts 145. FIG. 7C shows a condition in which the right speaker 140-1 and the left speaker 140-2 are connected to the seat 141 through the shafts 145.

### (Fifth embodiment)

FIG. 8 is a sectional view showing the structure of an fifth embodiment of the present invention. A sound distributing portion 102 (FIG. 4) of the fifth embodiment has a transmission passage leading from a sound reproducing portion (FIG. 4) 101 to a speaker 140. The transmission passage includes a seat 241 and a head rest 244 partially and the transmission passage between the seat 241 and the head rest 244 includes a receiver 250 (on the head rest 244) and a transmitter 251 (on the seat 241).

This structure hides the wire because it passes through the seat 241 and the head rest 244 and facilitates removal of the head rest 244 because the transmission passage between the seat 241 and the head rest 244 is connected wirelessly.

### (Sixth embodiment)

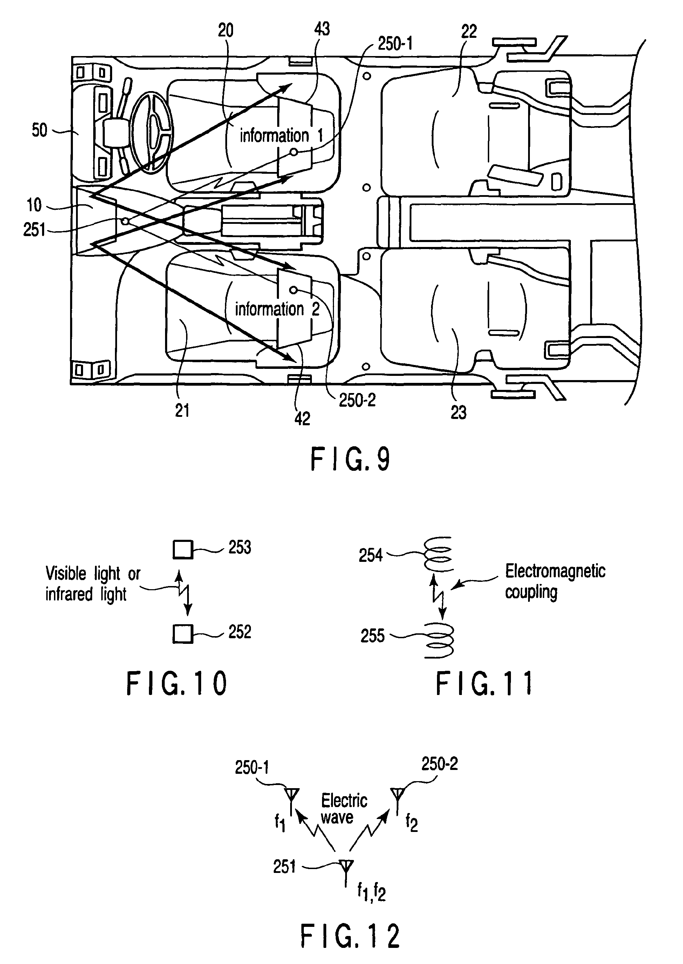

FIG. 9 is a diagram for explaining the outline of a sixth embodiment of the present invention. A transmitter 251 is mounted on a front panel 50 as shown in FIG. 9. A receiver 250-1 is mounted on a head rest 43 of a driver's seat 20 and a receiver 250-2 is mounted on a head rest 42 of a passenger seat 21.

A sound distributing portion 102 (FIG. 4) has a transmission passage leading from a sound reproducing portion 101 (FIG. 4) to the speakers contained in the head rests 43, 42. The transmission passage includes the front panel 50 and the head rest 43 (or 42) partially and a transmitter 200 and the receiver 250-1 (or 250-2) are used to connect the front panel 50 with the head rest 43 (or 42) wirelessly.

Since according to such a structure, the transmission passage between the front panel 50 and the head reset 43 (or 42) is connected wirelessly, no wire needs to be placed around.

### (Seventh embodiment)

FIG. 10 is a diagram for explaining the outline of a seventh embodiment of the present invention. According to the seventh embodiment, the transmitter and the receiver shown in FIGS. 8, 9 are a light emitting portion 252 and a light receiving portion 253, respectively, as shown in FIG. 10, which enables communication with visible light or infrared light.

Using visible light or infrared light having a high directivity in this way prevents an interference with the transmission passage of other seats. If the transmission passage is short like between the head rest and the seat (FIG. 8), communication by electromagnetic coupling by using electromagnetic coils 254, 255 as shown in FIG. 11 can provide the same effect.

### (Eighth embodiment)

FIG. 12 is a diagram for explaining the outline of an eighth embodiment of the present invention. The eighth embodiment has a feature in that a transmitter 251 and receivers 250-1, 250-2 communicate with each other using electric wave and different frequencies f1, f2 or different modulation methods are used for each seat.

Using electric wave in this way prevents obstruction by an obstacle and an interference with the transmission passage of other seats by using different frequencies or modulation methods for each seat.

### (Ninth embodiment)

A ninth embodiment of the present invention achieves digital packet communication by providing each seat with a different ID using electric wave.

Obstruction by any obstacle can be prevented by using electric wave and further, by executing the digital packet communication with a different ID provided to each seat, electric wave can be used effectively while preventing an interference with other seats.

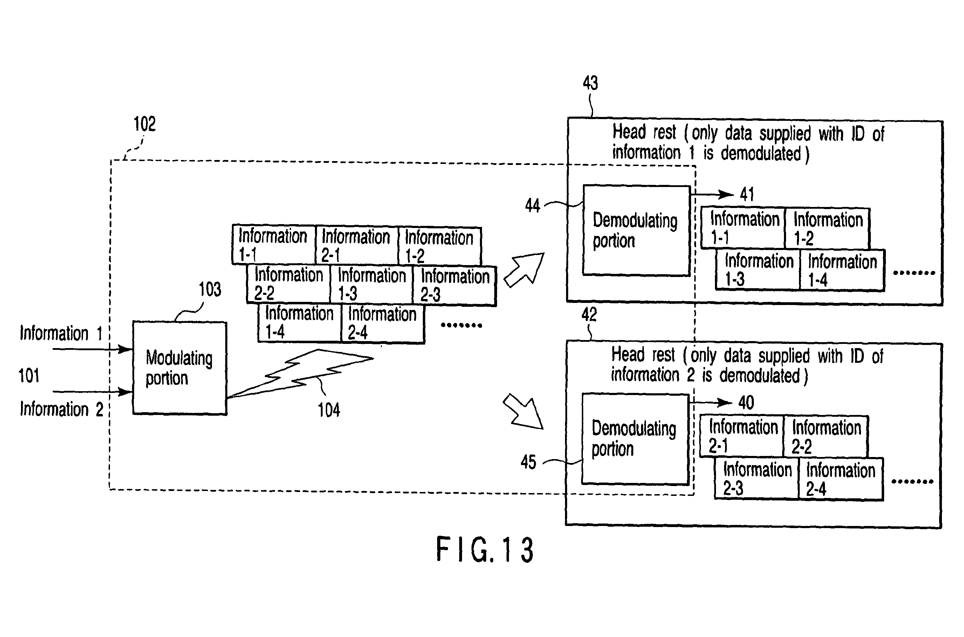

FIG. 13 shows the structure for achieving the ninth embodiment of the present invention. A sound distributing portion 102 modulates sounds of information 1 and information 2 reproduced from a sound reproducing portion 101 digitally by means of a modulating portion 103 and transmits through a transmission passage 104 of electric wave with ID provided to each sound data of the information 1 and information 2. A demodulating portion 44 provided on a head rest 43 demodulates only data supplied with ID of the information 1 selectively from transmitted digital sound signal and reproduces the sound through a speaker 41. Likewise, a demodulating portion 45 provided on a head rest 42 demodulates only data supplied with ID of the information 2 selectively from the digital sound signal and reproduces the sound through a speaker 40.

### (Tenth embodiment)

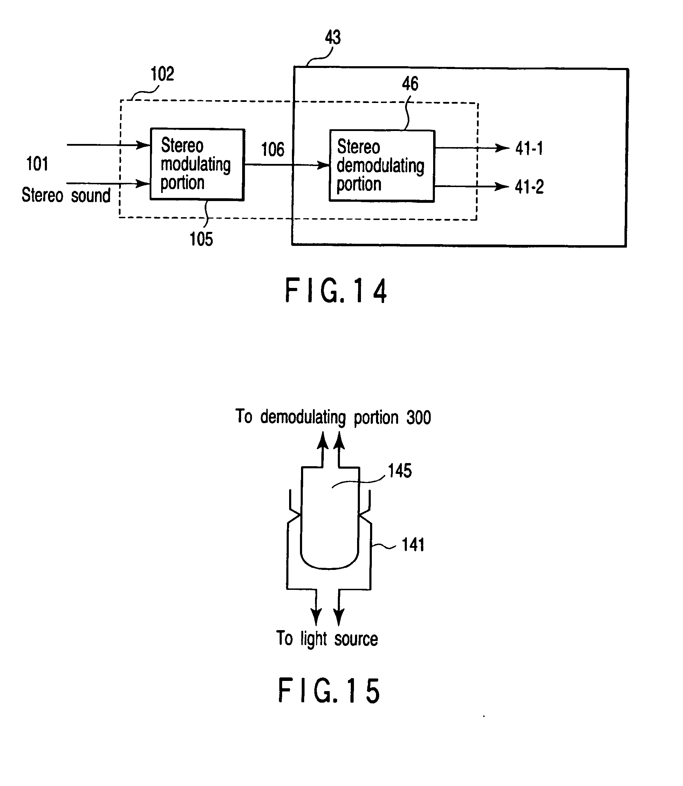

FIG. 14 is a diagram showing the structure of a tenth embodiment of the present invention. A sound distributing portion 102 comprises a stereo modulating portion 105 for modulating stereo sound reproduced by a sound reproducing portion 101 and a stereo demodulating portion 46 for demodulating the sound signal transmitted through a transmission passage 106. The stereo demodulating portion 46 is incorporated in a head rest 43.

To transmit the stereo sound to a right and left speakers 41-1, 41-2 incorporated in the head rest 43, the stereo sound is modulated by the stereo modulating portion 105 before transmission. This is generally employed to transmit plural signals like the stereo sound effectively and demodulating the transmitted sound signal with the stereo demodulating portion 46 incorporated in the head rest 43 can simplify the structure of the transmission passage from two lines to one line.

FIG. 15 not part of the present invention is a diagram for explaining a modulation of the tenth embodiment. This modification has a feature in that electric power of the stereo demodulating portion 46 is supplied from the seat through the head rest mounting shaft 145 as shown in FIG. 6 or 7. The head rest 43 may be removed to adjust the seat into a fully flat condition or for maintenance. Although connection with wire provides inconvenience at that time, employing the structure in which power is supplied from the seat by inserting the head rest mounting shaft 145 into the shaft receiver 160 in the seat can secure a good appearance and further easiness of maintenance.

Further, by transmitting modulated sound signal such that it is superimposed on electric power, all necessary signals can be transmitted by connecting only the power line to the head rest through the shaft.

### (Eleventh embodiment)

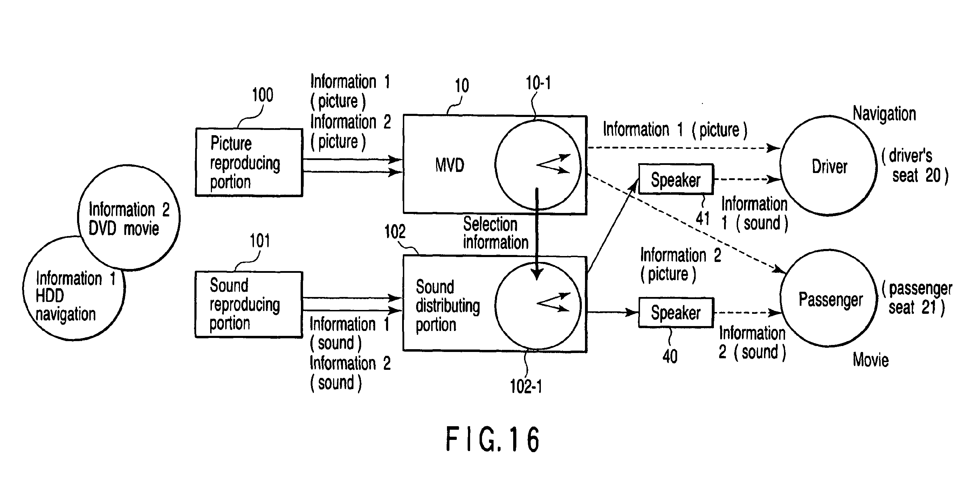

FIG. 16 is a diagram for explaining the outline of an eleventh embodiment of the present invention. According to the eleventh embodiment, an MVD 10 has a picture selector 10-1 for selecting a picture to be sent to each seat and further, a sound distributing portion 102 comprises a sound selector 102-1 for distributing sound which matches with a picture selected by the picture selector 10-1 to each seat. For example, if picture of information 1 (navigation information) is selected by the picture selector 10-1, the sound selector 102-1 selects sound of the information 1 which matches with the picture of the corresponding information 1 and transmits it to a speaker 41 of a driver's seat 20. Likewise, if picture of the information 2 (picture information) is selected by the picture selector 10-1, the sound selector 102-1 selects sound of the information 2 which matches with picture of the corresponding information 2 and transmits it to a speaker 40 of a passenger seat 21.

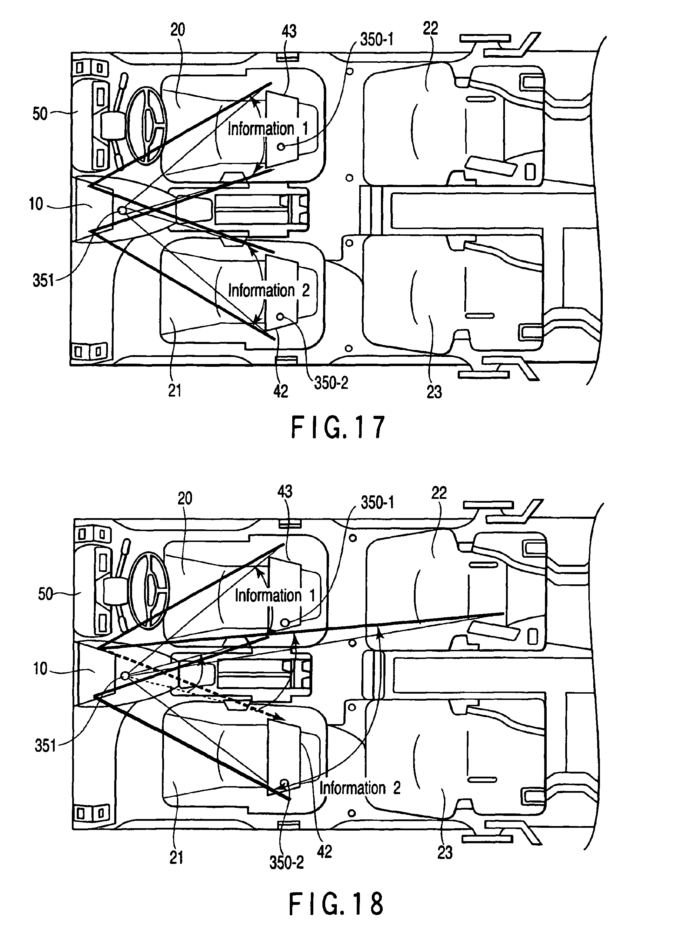

FIG. 17 shows a condition in which picture and sound of the information 1 and picture and sound of the information 2 are selected by the picture selector 10-1 and the sound selector 102-1 and supplied to the driver's seat 20 and the passenger seat 21. A light emitting portion 351 and light receiving portions 350-1, 350-2 are provided to achieve transmission of sound with visible light or infrared light.

According to this structure, the MVD capable of selecting a picture to be provided to each seat, can distribute sound which always matches with the selected picture to each seat, so that even if the picture is changed over, the sound which always matches with the picture can be listened to selectively thereby enhancing comfort of user. If a condition which displays no picture is selected, waste power consumption can be suppressed by stopping the transmission of sound interlockingly.

### (Twelfth embodiment)

FIG. 18 is a diagram for explaining the outline of a twelfth embodiment of the present invention. An MVD 10 of the twelfth embodiment has a picture angle selector (not shown) for selecting the position of a seat which allows each picture to be seen. The sound distributing portion distributes sound matching with a picture at the position of a seat selected by the picture angle selector.

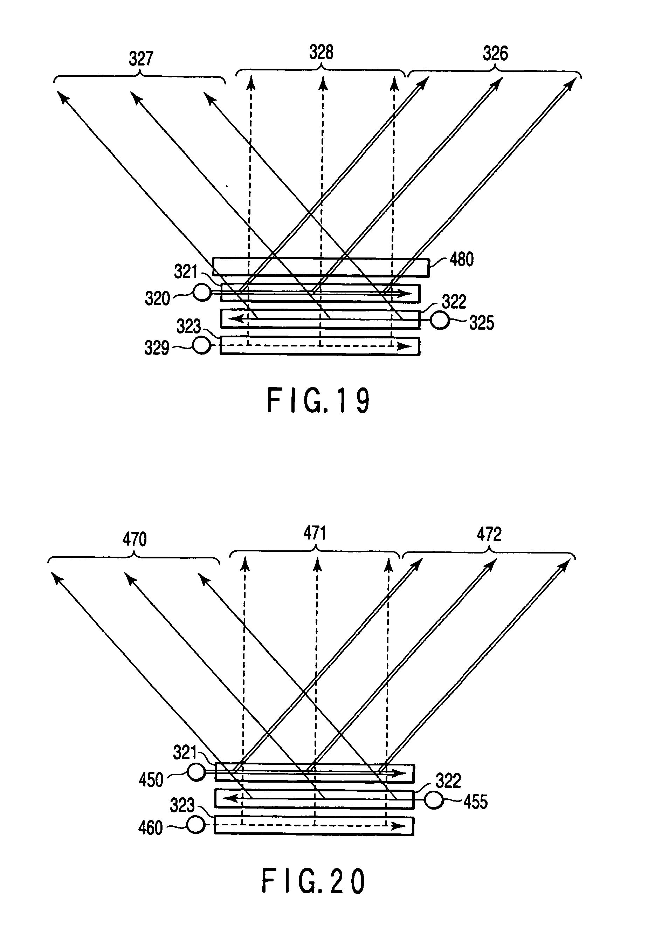

To provide a picture depending on the selected picture angle, an optical structure as shown in FIG. 19 may be used. FIG. 19 shows the structure for achieving directional illumination of three directions, which is comprised of a first light source 320 and a first light introducing plate 321 for emitting a first light flux, a second light source 325 and second light introducing plate 322 for emitting a second light flux and a third light source 329 and third light introducing plate 323 for emitting a third light flux such that these are overlaid in this order. The second light flux passes through the first light introducing plate 321 and the third light flux passes through the first light introducing plate 321 and the second light introducing plate 322. The emission directions of the respective light fluxes are different. A liquid crystal display 480 is disposed in front of the first light introducing plate 321.

When the picture of the information 2 is displayed on the liquid crystal display 480 in front of the light introducing plate, the MVD 10 carries out first picture illumination 326 by activating the first light source 320 of FIG. 19, so as to provide the picture of the information 2 to a passenger seat 21 as shown in FIG. 18 (shown by dotted line). When the picture of the information 1 is displayed on the liquid crystal display 480, second picture illumination 327 is carried out by activating the second light source 325 of FIG. 19 so as to provide the picture of the information 1 to the driver's seat 20 as shown in FIG. 18. By executing these actions alternately at a high speed, the picture of the information 2 and the picture of the information 1 are provided to the passenger seat and the driver's seat, respectively. Further, when it is desired to provide picture to the rear seats 22, 23 also, the third light source 329 is activated to execute third picture illumination 326.

The picture angle selector selects the angle range of picture illumination by controlling emission of light of the first light source 320, the second light source 325 and the third light source 329 electrically or mechanically.

For example, if the third light source 329 is controlled to emit light at the same time as the first light source 320, the picture angle for providing picture of the information 2 can be expanded as compared with a case of using only the first light source 320 (from dotted line to solid line in the same Figure) as shown in FIG. 18, thereby providing the same picture as the passenger seat to the rear seats also. Likewise, if the third light source 329 is controlled to emit light at the same time as the second light source 325, the same picture as for the driver can be provided to the rear seats also. Naturally, if the first light source 320, the second light source 325, and the third light source 329 are controlled to emit light at the same time, the same picture can be provided to all the seats.

When communication with visible light or infrared light is used to distribute sound like the seventh embodiment, the same optical structure can be used to distribute sound corresponding to a selected picture angle.

That is, to distribute sound to the head rest 42 of the passenger seat 21, for example, by providing with a first light emitting portion 450, a second light emitting portion 455 and a third light emitting portion 460 as light emitting portions for distributing sound, first sound information 472 is distributed by activating the first light emitting portion 450 shown in FIG. 20. To distribute sound to the head rest 43 of the driver's seat 20, second sound information 470 is distributed by activating the second light emitting portion 455 shown in FIG. 20. Further, to distribute sound to the head rest 43 of the rear seats 22, 23, third sound information 471 is distributed by activating the third light emitting portion 460.

If sound signal of the same information 2 as for the first light emitting portion 450 is provided to the third light emitting portion 460, the angle range for distributing the sound of the information 2 can be expanded as compared to a case of using only the first light emitting portion 450 as indicated with dotted line of FIG. 18, so that the sound information as for the passenger seat can be distributed to the rear seats.

Likewise, if sound signal of the same information 1 as for the second light emitting portion 455 is provided to the third light emitting portion 460, the same sound information as for the driver's seat can be distributed to the rear seats also. Naturally, if the same sound signal is provided to the first light emitting portion 450, the second light emitting portion 455 and the third light emitting portion 460, the same sound information can be distributed to all the seats.

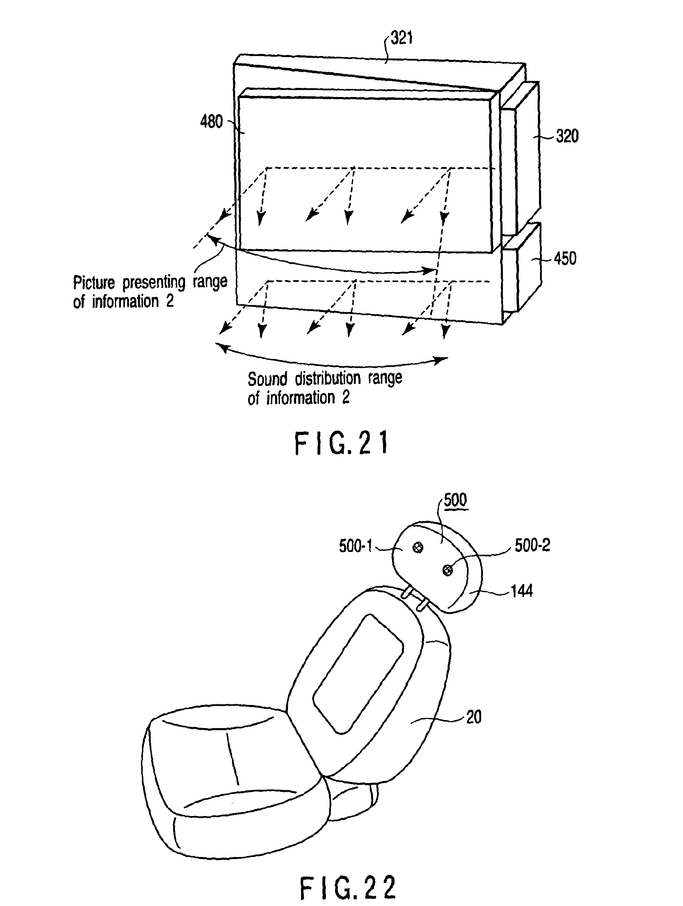

By interlocking control of the light emitting portions for distributing sound with control of the light sources for providing picture, sound always matching with picture can be distributed even if the picture angle is changed over. As for a method for interlocking the respective controls, it is permissible to modulate the light source with sound signal and superimpose sound on illumination. For example, by providing a light source (first light source 320) and a light emitting portion (first light emitting portion 450) in the same way with respect to a light introducing plate (first light introducing plate 321) as shown in FIG. 21, the same optical system may be used.

By distributing sound matching with selected picture to each seats in a MVD capable of selecting the positions of seats which allow to see each picture, sound which always matches with picture can be listened to even if the picture is changed over thereby enhancing comfort of user.

## Claims

1. An in-vehicle information reproducing apparatus, comprising:
a display (10) capable of presenting plural pictures reproduced by a picture reproducing portion (100) corresponding to seating positions of plural passengers individually;
a sound distributing portion (102) which distributes plural sounds corresponding to the plural pictures reproduced by the sound reproducing portion (101) individually corresponding to the seating position of the plural passengers, **characterized by** plural seats (20, 21) each having a head rest (42, 43) on which each passenger is seated; and
speakers (40, 41) built in the head rests of the plural seats (20, 21) for reproducing sound distributed from the sound distributing portion (102), wherein the sound distributing portion (102) includes a transmission passage (104) leading from the sound reproducing portion (101) to at least one of the speakers (40, 41); the transmission passage (104) contains the seat (20, 21) or a front panel (50) and the head rest (42, 43) partially; and the transmission passage (104) between the seat (20, 21) or the front panel (50) and the head rest (42, 43) is connected wirelessly.

2. The in-vehicle information reproducing apparatus according to claim 1, **characterized in that** the speakers (40, 41) are built in the head rests of respective passenger seats for reproducing sound distributed from the sound distributing portion (102).

3. The in-vehicle information reproducing apparatus according to claims 1 or 2, **characterized in that** the wireless connection is using electric waves and employs digital packet communication supplied with a different ID for each seat (20, 21) in the vehicle compartment.

4. The in-vehicle information reproducing apparatus according to any one of the preceding claims, **characterized in that** the sound distributing portion (102) comprises a modulating portion (103) for modulating sound reproduced by the sound reproducing portion (101) and a demodulating portion (40, 45) for demodulating sound signal transmitted by the transmission passage (104), the demodulating portion (44, 45) being incorporated in the head rest (42, 43).

5. The in-vehicle information reproducing apparatus according to claim 4, **characterized in that** power for the demodulating portion (44, 45) is supplied from the seat (20, 21) through the head rest mounting shaft (145).

6. The in-vehicle information reproducing apparatus according to claim 1 or 2, **characterized in that** the wireless connection is using visible light or infrared light.

7. The in-vehicle information reproducing apparatus according to claim 1 or 2, **characterized in that** the wireless connection is using electric waves and a different frequency or modulation method is employed for each seat (20, 21) in a vehicle compartment.

8. The in-vehicle information reproducing apparatus according to one of the preceding claims, **characterized in that** the display (10) has a picture selector (10-1) for selecting a picture to be presented to each seat and the sound distributing portion (102) distributes sound matching with picture selected by the picture selector (10-1) to each seat.

9. The in-vehicle information reproducing apparatus according to one of the preceding claims, **characterized in that** the display (10) has a picture angle selector for selecting the position of the seat that allows each picture to be seen and the sound distributing portion (102) distributes sound matching with picture to the position of the seat selected by the picture angle selector.

## Patentansprüche

1. Fahrzeuginterne Informationsvervielfältigungsvorrichtung mit:
einer Anzeige (10), die dazu eingerichtet ist, mehrere von einem Bildvervielfältigungsteil (100) vervielfältigte Bilder entsprechend den Sitzpositionen mehrerer Passagiere individuell darzustellen;
einem Tonverteilungsteil (102), welches entsprechend den mehreren Bildern mehrere von einem Tonvervielfältigungsteil (101) vervielfältigte Töne entsprechend den Sitzpositionen der mehreren Passagiere individuell verteilt, **gekennzeichnet durch** mehrere Sitze (20, 21), von denen jeder eine Kopfstütze (42, 43) aufweist, an denen jeder Passagier sitzt; und
Lautsprecher (40, 41), die in den Kopfstützen der mehreren Sitze (20, 21) eingebaut sind, um von dem Tonverteilungsteil (102) verteilte Töne zu vervielfältigen, wobei das Tonverteilungsteil (102) eine Übertragungsstrecke (104) enthält, die von dem Tonvervielfältigungsteil (101) zu mindestens einem der Lautsprecher (40, 41) führt; wobei die Übertragungsstrecke (104) den Sitz (20, 21) oder eine Vorderverkleidung (50) und teilweise die Kopfstütze (42, 43) umfasst; und die Übertragungsstrecke (104) zwischen dem Sitz (20, 21) oder der Vorderverkleidung (50) und der Kopfstütze (42, 43) eine drahtlose Verbindung ist.

2. Fahrzeuginterne Informationsvervielfältigungsvorrichtung nach Anspruch 1, **dadurch gekennzeichnet, dass** die Lautsprecher (40, 41) in den Kopfstützen jeweiliger Passagiersitze eingebaut sind, um die von dem Tonverteilungsteil (102) verteilten Töne zu vervielfältigen.

3. Fahrzeuginterne Informationsvervielfältigungsvorrichtung nach Anspruch 1 oder 2, **dadurch gekennzeichnet, dass** die drahtlose Verbindung elektrische Wellen verwendet und digitale Paketkommunikation einsetzt, bei der eine unterschiedliche ID für jeden Sitz (20, 21) in dem Fahrzeuginnenraum bereitgestellt wird.

4. Fahrzeuginterne Informationsvervielfältigungsvorrichtung nach einem der vorhergehenden Ansprüche, **dadurch gekennzeichnet, dass** das Tonverteilungsteil (102) aufweist ein Modulationsteil (103) zum Modulieren von Tönen, die von dem Tonvervielfältigungsteil (101) vervielfältigt wurden, und ein Demodulationsteil (40, 45) zum Demodulieren von Tonsignalen, die über die Übertragungsstrecke 104 gesendet wurden, wobei das Demodulationsteil (44, 45) in der Kopfstütze (42, 43) integriert ist.

5. Fahrzeuginterne Informationsvervielfältigungsvorrichtung nach Anspruch 4, **dadurch gekennzeichnet, dass** Energie für das Demodulationsteil (44, 45) von dem Sitz (20, 21) über einen Kopfstützenanbringungsschaft (145) bereitgestellt wird.

6. Fahrzeuginterne Informationsvervielfältigungsvorrichtung nach Anspruch 1 oder 2, **dadurch gekennzeichnet, dass** die drahtlose Verbindung sichtbares Licht oder Infrarotlicht verwendet.

7. Fahrzeuginterne Informationsvervielfältigungsvorrichtung nach Anspruch 1 oder 2, **dadurch gekennzeichnet, dass** die drahtlose Verbindung elektrische Wellen verwendet und eine unterschiedliche Frequenz oder ein unterschiedliches Modulationsverfahren für jeden Sitz (20, 21) in einem Fahrzeuginnenraum eingesetzt wird.

8. Fahrzeuginterne Informationsvervielfältigungsvorrichtung nach einem der vorhergehenden Ansprüche, **dadurch gekennzeichnet, dass** die Anzeige (10) einen Bildwähler (10-1) zum Auswählen eines jedem Sitz darzustellenden Bildes aufweist und das Tonverteilungsteil (102) Töne, die zu durch den Bildwähler (10-1) ausgewählten Bildern passen, zu jedem Sitz verteilt.

9. Fahrzeuginterne Informationsvervielfältigungsvorrichtung nach einem der vorhergehenden Ansprüche, **dadurch gekennzeichnet, dass** die Anzeige (10) einen Bildwinkelwähler aufweist, zum Auswählen der Position des Sitzes, welche erlaubt, dass jedes Bild gesehen werden kann, wobei das Tonverteilungsteil (102) zu dem Bild passende Töne zu der von dem Bildwinkelwähler ausgewählten Position des Sitzes verteilt.

## Revendications

1. Appareil de lecture d'informations à l'intérieur d'un véhicule, comprenant :
un écran (10) capable de présenter diverses images reproduites par une partie (100) de reproduction d'images correspondant individuellement aux positions assises des divers passagers;
une partie (102) de distribution du son qui distribue divers sons correspondant aux diverses images reproduites par la partie (101) de reproduction du son, correspondant individuellement aux places assises des divers passagers, **caractérisé par**
plusieurs sièges (20, 21) comportant chacun un repose-tête (42, 43) contre lequel chaque passager est assis; et
des haut-parleurs (40, 41) intégrés dans les repose-têtes des divers sièges (20, 21), destinés à reproduire les sons distribués par la partie (102) de distribution du son, dans lequel la partie (102) de distribution du son inclut une voie (104) de transmission menant de la partie (101) de reproduction du son à au moins l'un des haut-parleurs (40, 41); la voie (104) de transmission contenant le siège (20, 21) ou un panneau frontal (50) et partiellement le repose-tête (42, 43); et la voie (104) de transmission entre le siège (20, 21) ou le panneau frontal (50) et le repose-tête (42, 43) étant connectée sans fil.

2. Appareil de lecture d'informations à l'intérieur d'un véhicule selon la revendication 1, **caractérisé en ce que** les haut-parleurs (40, 41) sont intégrés dans les repose-têtes des sièges respectifs des passagers dans le but de reproduire les sons distribués par la partie (102) de distribution du son.

3. Appareil de lecture d'informations à l'intérieur d'un véhicule selon les revendications 1 ou 2, **caractérisé en ce que** la connexion sans fil utilise des ondes électriques et emploie une communication numérique par paquets munie d'une ID différente pour chaque siège (20, 21) dans l'habitacle du véhicule.

4. Appareil de lecture d'informations à l'intérieur d'un véhicule selon l'une quelconque des revendications précédentes, **caractérisé en ce que** la partie (102) de distribution du son comprend une partie (103) de modulation destinée à moduler les sons reproduits par la partie (101) de reproduction du son et une partie (40, 45) de démodulation destinée à démoduler les signaux acoustiques transmis par la voie (104) de transmission, la partie (40, 45) de démodulation étant intégrée dans le repose-tête (42, 43).

5. Appareil de lecture d'informations à l'intérieur d'un véhicule selon la revendication 4, **caractérisé en ce que** l'énergie nécessaire à la partie (40, 45) de démodulation est fournie par le siège (20, 21) au moyen du support de montage (145) du repose-tête.

6. Appareil de lecture d'informations à l'intérieur d'un véhicule selon la revendication 1 ou 2, **caractérisé en ce que** la connexion sans fil utilise de la lumière visible ou de la lumière infrarouge.

7. Appareil de lecture d'informations à l'intérieur d'un véhicule selon la revendication 1 ou 2, **caractérisé en ce que** la connexion sans fil utilise des ondes électriques et qu'une fréquence ou un procédé de modulation différents sont employés pour chaque siège (20, 21) dans un habitacle de véhicule.

8. Appareil de lecture d'informations à l'intérieur d'un véhicule selon l'une des revendications précédentes, **caractérisé en ce que** l'écran (10) comporte un sélecteur (10-1) d'images destiné à sélectionner une image devant être présentée à chaque siège et la partie (102) de distribution du son distribue à chaque siège le son s'adaptant à l'image sélectionnée par le sélecteur (10-1) d'images.

9. Appareil de lecture d'informations à l'intérieur d'un véhicule selon l'une des revendications précédentes, **caractérisé en ce que** l'écran (10) comporte un sélecteur d'angle d'image destiné à sélectionner la position du siège qui permet à chaque image d'être vue et la partie (102) de distribution du son distribue à la position du siège sélectionnée par le sélecteur d'angle d'image le son s'adaptant à l'image.
